Europäisches Patentamt

European Patent Office

Office européen des brevets

(11) Publication number: **0 429 698 A1**

## EUROPEAN PATENT APPLICATION

(21) Application number: 89121943.8

(51) Int. Cl.⁵: **C01B 31/22**

(22) Date of filing: 28.11.89

(43) Date of publication of application:
**05.06.91 Bulletin 91/23**

(84) Designated Contracting States:
**AT BE CH DE ES FR GB IT LI Bulletin 1**

(71) Applicant: **SOCIETE INDUSTRIELLE DE L'ANHYDRIDE CARBONIQUE**
**29, Rue Emile Zola**
**F-95872 Bezons Cédex(FR)**

(72) Inventor: **Kiesslich, Rodolphe Konrad**
**15 rue du Fort**
**F-78250 Meulan(FR)**

(74) Representative: **Roesner, Werner**
**MESSER GRIESHEIM GmbH Patentabteilung**
**Lärchenstrasse 137 Postfach 83 00 48**
**W-6230 Frankfurt/Main 83(DE)**

(54) **Product based on solid carbon dioxide, device for conditioning and process for conditioning the product.**

(57) - Conditioning of a product based on solid carbon dioxide, for example of the carbon dioxide snow type.
- The conditioning device is characterized in that:
- the compression assembly (B) consists of two elements (2, 3) which are movable relative to one another and between which the product (1) is compressed,
- and the shaping members (4, 5) of the shaping assembly are moulding members produced on each of the two movable elements (2, 3), the moulding members of one movable element (2) having a profile which complements the moulding members of the other movable element (3), the compression assembly (B) thus also forming the moulding assembly and vice versa.
- Application to the preservation of various products at low temperature.

FIG. 1

# PRODUCT BASED ON SOLID CARBON DIOXIDE, DEVICE FOR CONDITIONING AND PROCESS FOR CONDITIONING THE PRODUCT

The present invention relates to the technical field of the conditioning of a product based on solid carbon dioxide, for example of the carbon dioxide snow type.

More particularly it relates to a product based on solid carbon dioxide consisting of a multitude of elements which are independent of one another and have a compacted structure. The invention also relates to a device for conditioning a bulk product based on solid carbon dioxide as well as a process for conditioning such a product.

Because of its light weight, carbon dioxide snow naturally has a tendency to set or to form lumps, which renders its handling and distribution awkward. The conditioning of carbon dioxide is, consequently, an operation which is often necessary due to the drawbacks which its use poses.

Conventionally, in the prior art, it is known to obtain, from a product such as carbon dioxide snow, by means of consolidation and compression, a final product in the form of small sticks, "rice grains" or flakes. The initial carbon dioxide snow, with a density in the region of 500 kg/m³, passes, during compression to the final state of carbon dioxide ice with a density of 1,500 kg/m³.

The machines used for these conditioning operations, referred to as pelletizers or granulators or, alternatively, ice presses, generally consist of an assembly for receiving and feeding the product to be conditioned, an assembly for mechanical compression of the product operating inside a chamber and an assembly for shaping the product inside which the product partially assumes its final definitive form.

These machines may be, for example, of the "plane die" or "cylindrical die" type, according to the configuration of the compression and shaping assemblies. In the first type of so-called "plane die" machines, the compression assembly consists of a piston following a straight to-and-fro movement between two limit positions inside a chamber. In the first limit position, the chamber has its maximum volume and the aperture of the chamber is uncovered, thereby enabling the bulk product to penetrate. In the second limit position, the chamber has its minimum volume. During the passage of the piston from the first to the second position, the product is compressed in the chamber between the piston and an end wall of the chamber. This end wall is perforated with a series of apertures, at the level of which are mounted shaping and discharge tubes or channels. It will thus be understood that the carbon dioxide snow is compressed between the piston and the walls of the chamber and passes into the state of carbon dioxide ice. The ice is then forced or compelled to enter the channels where it assumes the form of the section of the channel. The ice is discharged from the channels by pushing, by means of the permanent movement of the piston and the continuous feeding of the snow. The small sticks, rice grains or flakes of ice are obtained by the ice breaking, usually at random, through the action of gravity upon emerging from the channels.

The so-called "cylindrical die" machines are very similar in their principle and in their operation. The piston is replaced by a rotating compression roller mounted on an arm which is itself movable. The roller is displaced over the inner wall of a cylinder. The carbon dioxide snow is poured inside the cylinder which thus forms the compression chamber and it is compressed between the roller and the wall of the cylinder. A portion of the wall of the cylinder is perforated with a series of apertures and the apertures are extended by channels for shaping and discharging the ice. Operation is identical to that for "plane die" machines.

The process used by these conditioning machines may easily be deduced from the operation of the machines. The carbon dioxide snow passes to the state of carbon dioxide ice by means of mechanical compression before undergoing the shaping stage which gives it its definitive form.

The carbon dioxide ice in the form of small sticks, rice grains or flakes, as well as the plane or cylindrical die machines of the prior art and the related conditioning process pose a certain number of drawbacks.

Despite its conditioning into small sticks for example, the carbon dioxide ice with a high density (1,500 kg/m³) retains too high a mass which, combined with its low temperature, leads to burning and degradation on contact with products in respect of which it is desired only to extend the residence time at a satisfactory temperature.

The large, expensive and awkward-to-use machines of the prior art do not make it possible easily to control the density of the final product, due to their design, or to control the dimensions and forms of the product without creating problems in the operation of the machines.

The conditioning process of the prior art, designed to obtain a product of high density, does not make it possible to obtain a product whose characteristics are constant and uniform.

The subject of the invention is to remedy the abovementioned drawbacks by proposing a product which guarantees that the product to be preserved will be cooled without reacting or inducing a detrimental reaction with the latter and which is easy to handle and dispense.

The subject of the invention also relates to a device and a process for conditioning a product based on carbon dioxide which remedies the drawbacks of the prior art and, in particular, permits simple implementation of the control of the density and of the size of the product.

In order to attain the abovementioned objective, the product is characterized in that the density of the elements is between 500 and 1,500 kg/m$^3$ and in that the elements are moulded.

The conditioning device according to the invention is characterized in that:
- the compression assembly consists of two elements which are movable relative to one another and between which the product is compressed,
- and the shaping members of the shaping assembly are moulding members produced on each of the two movable elements, the moulding members of one movable element having a profile which is complementary to the moulding members of the other movable element, the compression assembly thus also constituting the moulding assembly and vice versa.

The conditioning process according to the invention is characterized in that:
- the bulk product is divided into a multitude of portions of product of defined volume before being mechanically compressed,
- the mechanical compression and final shaping of the product then take place simultaneously for each portion of product in order to give the product its definitive compressed form.

Other diverse features emerge from the description given below with reference to the appended drawings which show, by way of non-limiting examples, embodiments of the subject of the invention.

Fig. 1 shows a transverse sectional view of a first alternative embodiment of the device.

Fig. 2 shows a transverse sectional view of a detail of the gear pair according to the first alternative embodiment.

Fig. 3 shows a transverse sectional view of the hollow of a gear tooth according to the first alternative embodiment.

Fig. 4 shows a sectional view of a second alternative embodiment.

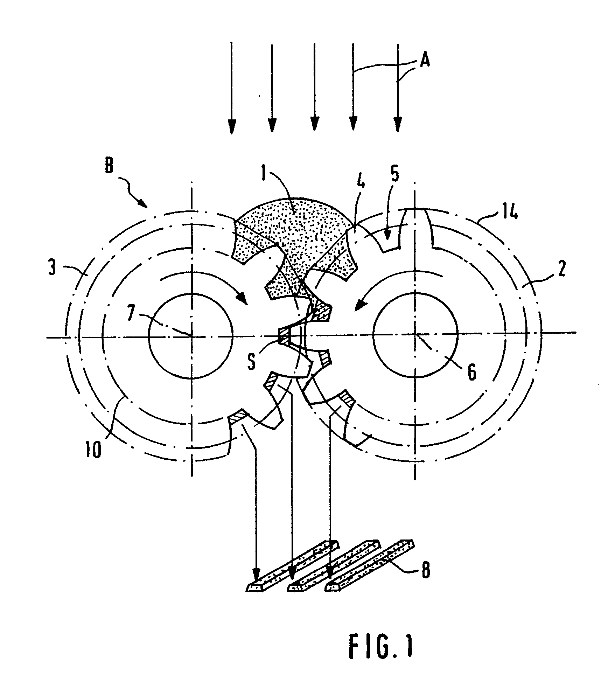

Fig. 1 shows a mass of bulk solid carbon dioxide 1 originating from a receiving and feeding assembly which is not shown on Fig. 1. The bulk carbon dioxide 1 may, for example, originate from a hopper or a conveyer belt or another similar conventional assembly.

Whatever solution is chosen, the product is generally poured in the direction of the arrows A and comes into contact with a compression assembly B which consists of a pair of gears, in the case of Fig. 1 two rotating discs 2 and 3 engaging with one another. Each disc 2 or 3 comprises on its periphery a series of moulding members, in this case teeth 4, defining between them a series of hollows 5.

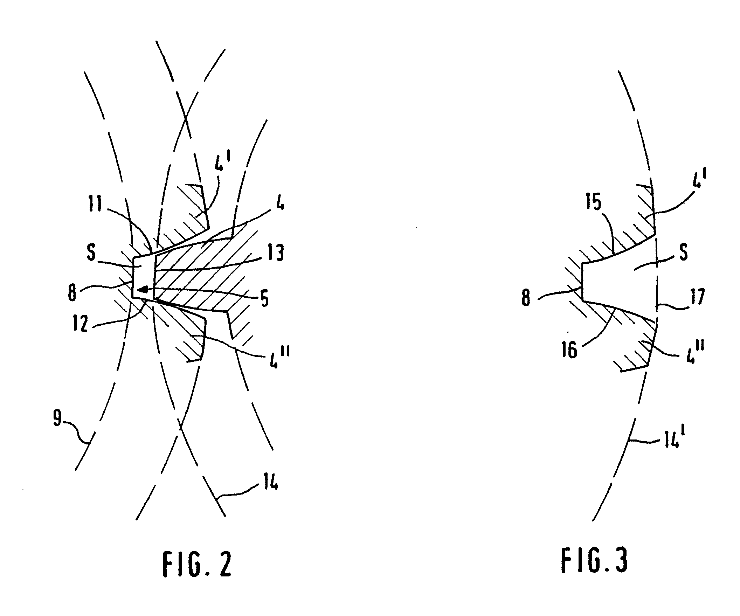

The profile of the teeth 4 of a disc complement the hollows 5 in the opposite disc. The distance between the axes of rotation 6, 7 of the discs 2 and 3 and/or the form of the teeth 4 and of the hollows 5 are, however, chosen so as to provide a free space during engagement. At the bottom of Fig. 1, will be observed the conditioned carbon dioxide which, in this case, is in the form of flakes 8. In Fig. 2, it is seen that, as a first approximation, the section s of this free space is limited at the level of the hollow 5 by the length 8 located on the circle 9 having for diameter the inside diameter or diameter of the foot of the teeth 4 of the disc 3 and by the heights 11 and 12 located on the foot of the two teeth 4$'$ and 4$''$ adjacent to the hollow 5. At the level of the tooth 4, the section s is limited by the end length 13 of the head of the tooth 4. This length is located on the outer circle of the head 14 of the teeth 4 of the disc 2.

Of course, the section s is defined by assuming that the end length 13 forms a quadrilateral with the length 8 and the heights 11 and 12, which is not precisely the case in practise, for technical reasons which will be obvious to the person skilled in the art. Nevertheless, in this way, a good approximation of the section s is obtained.

Fig. 3 shows the section S which is the total section of a hollow 5 defined by the length 8, the total heights 15 and 16 extending over the foot and the head of the two teeth 4$'$ and 4$''$ adjacent to the hollow 5 and by the arc of the circle 17 located on the outer circle 14$'$ of the gear disc 2 or 3. The arc of the circle 17 closes the hollow 5.

The carbon dioxide snow which arrives in contact with the two rotating discs 2 and 3 fills, purely by means of gravity, the volumes defined by the series of hollows 5 of each disc and thus forms a portion of product of defined volume. The engagement of each tooth 4 with a hollow 5 will cause the portion of carbon dioxide snow contained in a hollow 5 to undergo a compression. At the same time, moreover, that the tooth 4 penetrates into the hollow 5 and that the carbon dioxide snow is compressed, the latter undergoes shaping by moulding.

Because of the existence of a free space defined by the section s and the width of the teeth 4 and of the hollows 5, the compression of the snow is arrested when the teeth 4 and hollows 5 are in a total engagement position or, alternatively, when the penetration of the teeth 4 is at its maximum. Simultaneously, the moulding and the conditioning are completed, the snow has assumed its definitive form and has attained the desired density. The final product may assume various forms, flakes, icicles, etc. The discharge of the final product takes place purely by means of gravity in conjunction with the rotation of the discs 2 and 3 and the centrifugal force deployed.

It may be seen that, with this device, the form and the size of the final product may be easily modified by changing the gear pair and by choosing discs of different module, width and tooth shape. It is also possible to vary the density of the product simply by modifying the value of the ratio s/S, or by modifying the speed of rotation of the gears.

Other types of gears may be used in addition to the pair of cylindrical gears presented, particularly rack and pinion gears, using an endless or double-helical screw.

The density of the particles or flakes which meet the requirements of the desired use and which are obtained using the device and conditioning process is of the order of 1,000 kg/m$^3$. At this stage of compression, it is observed that the flakes do not form lumps, nor is there any phenomenon of burning of the products which it is desired to preserve. Moreover, handling is easy. Density values between 500 kg/m$^3$ and 1,500 kg/m$^3$ may also be appropriate. In the case of densities below 1,000 kg/m$^3$, simply a slight tendency to the formation of lumps is observed. In the case of those above 1,000 kg/m$^3$, a slight tendency towards burning is observed. Satisfactory results are obtained when the particles (flakes, icicles or the like) have an average weight of 1 gramme and a density of 1,000 kg/m$^3$. However, this condition is not a prerequisite but only a preference.

By way of non-limiting indication, it will be noted that, in order to obtain particles or elements with a density of 1,000 kg/m$^3$, the engagement pressure s/S is of the order of 130 bars, the speed of rotation 50 revolutions per minute and the ratio s/S approximately 1/10 with a device according to Fig. 1. In addition, elements with an average weight of 1 gramme are obtained with two gears of module 4 having a tooth width of

The process for conditioning carbon dioxide may be deduced from the mode of operation of the device. It will be observed that the fact of dividing the product into portions of carbon dioxide snow before compression and moulding makes it possible to control, as soon as the conditioning cycle starts, the quantity of snow needed to form a particle or element and thus makes it possible simultaneously to take into account the density of the initial product and, simultaneously, to control the parameters of the final product. Similarly, the fact that compression and moulding take place at the same time means that it is possible to produce, in a controlled manner, products with an identical density but with different weights.

The fact that operations take place at the same time also facilitates moulding of the product which commences when the product is still in the state of carbon dioxide snow.

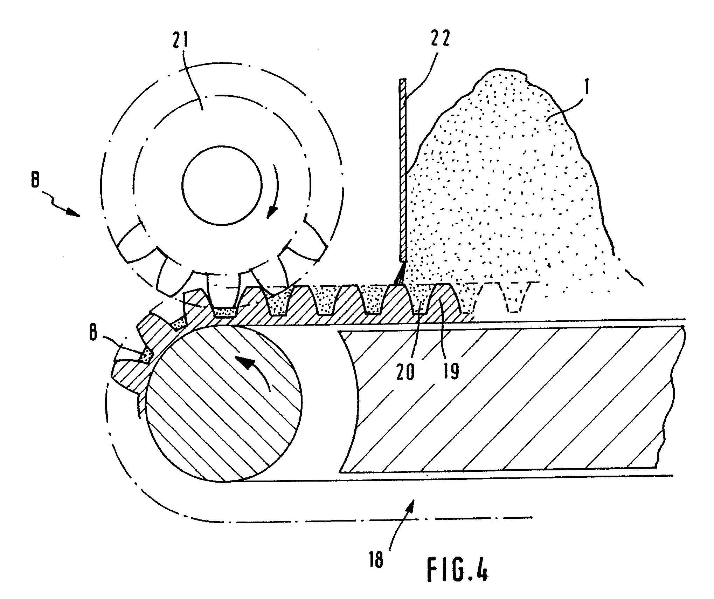

Fig. 4 shows an alternative embodiment of a device according to the invention. One of the discs of the gear is replaced by another type of rotating member, in this case a conveyer belt 18 consisting, in sectional view, of an alternating series of teeth 19 and hollows 20. A series of gear discs or a roller 21, for example which engages, as described above, with the teeth 10 and hollows 20, is preferably arranged at the discharge end of the conveyer belt 18. Discharge of the flakes is unchanged. A levelling device 22, for example a plate equipped with a brush, located upstream of the disc 21, guarantees correct filling of the hollows 20 in the case of a horizontal conveyer belt.

The invention is not limited to the examples described and shown since various modifications may be made thereto without departing from the scope thereof. Thus, it is possible to provide a device consisting of two conveyer belts whose profiles, teeth or grooves engage together and in the middle of which the snow is compressed and shaped.

## Claims

1. Product based on solid carbon dioxide, of the carbon dioxide snow type, consisting of a multitude of elements (8) which are independent of one another, of compacted structure and of finished form, characterized in that the density of the said elements (8) is between 500 and 1,500 kg/m$^3$ and in that the elements are moulded.

2. Product according to Claim 1, characterized in that the density of the said elements (8) is in the region of 1,000 kg/m$^3$.

3. Product according to Claim 1 or 2, characterized in that the average weight of each element (8) is approximately 1 gramme.

4. Device for conditioning a bulk product (1) based on solid carbon dioxide, in particular of the carbon dioxide snow type, comprising an assembly for receiving and feeding the bulk product (1) to be conditioned, an assembly (B) for mechanical compression of the product (1), consisting of at least one movable compression element which compresses the product against another element and an assembly for shaping the product (1) consisting of a series of shaping members (4, 5 and 19, 20) inside which the product (1) assumes a compact structure, characterized in that:

- the compression assembly (B) consists of two elements (2, 3 and 18, 21) which are movable relative to one another and between which the product (1) is compressed,

- and the shaping members (4, 5 and 19, 20) of the shaping assembly are moulding members produced on each of the two movable elements (2, 3 and 18, 21), the moulding members of one movable element (2, 18) having a profile which complements the moulding members of the other movable element (3, 21), the compression assembly (B) thus also forming the moulding assembly and vice versa.

5. Device according to Claim 4, characterized in that the two movable elements consist of two rotating elements (2, 3).

6. Device according to Claim 5, characterized in that the two rotating elements (2, 3) form a pair of gears which engage with one another.

7. Device according to Claim 4, characterized in that the two movable elements consist of a roller (21) and of a conveyer belt (18) which engage with one another via the complementary profiles of their moulding members.

8. Device according to Claim 7, characterized in that the moulding members of the roller (21) and of the conveyer belt (18) consist of teeth (19) separated by the hollows (20) of alternate teeth.

9. Device according to Claim 7 or 8, characterized in that the conveyer belt (18) comprises a levelling device (22) which guarantees the level filling of the hollows (20) of teeth with solid carbon dioxide.

10. Process for conditioning a product (1) based on solid carbon dioxide, of the carbon dioxide snow type, which consists, commencing with a bulk product (1):

- in compressing it mechanically,

- in shaping it into a multitude of elements (8) which are independent of one another and of compact structure, characterized in that:

- the bulk product is divided into a multitude of portions of product of defined volume before being mechanically compressed,

- the mechanical compression and final shaping of the product then take place simultaneously for each portion of product, in order to give the product its definitive compressed form.

11. Process according to Claim 10, characterized in that, once its definitive form has been acquired, the product (8) is not subjected to any force other than gravity.

12. Process according to Claim 10 or 11, characterized in that the mechanical compression of the portions of product is equal for each portion.

FIG. 1

FIG. 2

FIG. 3

FIG.4

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | US-A-2 499 386 (E.A. JOERREN)<br>* Whole document *<br>--- | 4,5,10-12 | C 01 B 31/22 |
| A | FR-A- 805 535 (LA CARBONIQUE FRANCAISE)<br>* Page 2, lines 5-16,20-27; figures 1-3 *<br>--- | 4 | |
| A | FR-A-2 078 442 (AIR REDUCTION CO. INC.)<br>----- | | |

|  |  |  | TECHNICAL FIELDS SEARCHED (Int. Cl.5) |
|---|---|---|---|
|  |  |  | C 01 B 31/00 |

The present search report has been drawn up for all claims

| Place of search | Date of completion of the search | Examiner |
|---|---|---|
| THE HAGUE | 28-12-1989 | BREBION J.CH. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

...............................................................................

& : member of the same patent family, corresponding document

EPO FORM 1503 03.82 (P0401)